(19) Europäisches Patentamt
European Patent Office
Office européen des brevets

(11) **EP 1 318 510 A2**

(12) **EUROPEAN PATENT APPLICATION**

(43) Date of publication:
**11.06.2003 Bulletin 2003/24**

(51) Int Cl.$^7$: **G11B 7/24**

(21) Application number: **02007071.0**

(22) Date of filing: **27.03.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(30) Priority: **06.12.2001 JP 2001372939**<br><br>(71) Applicant: **Kabushiki Kaisha Toshiba**<br>**Tokyo (JP)** | (72) Inventors:<br>• **Watabe, Kazuo, c/o K.K. Toshiba**<br>**Minato-ku, Tokyo 105-8001 (JP)**<br>• **Iwata, Katsuo, c/o K.K. Toshiba**<br>**Minato-ku, Tokyo 105-8001 (JP)**<br><br>(74) Representative: **Henkel, Feiler, Hänzel**<br>**Möhlstrasse 37**<br>**81675 München (DE)** |

(54) **Optical disk and recording/reproducing apparatus**

(57) There is disclosed an optical disk (11) constituted by covering an information recording layer (13) formed on a substrate (12) with a cover layer (14) having a light transmission property, in which ranges of a thickness t and a refractive index n of the cover layer (14) are defined. That is, a function f(n) which is not a constant regarding the refractive index n of the cover layer (14), and constants t1, t2 determined based on an allowable value of an aberration in the cover layer (14) are used to set the ranges of the thickness t of the cover layer (14) to a range of f(n)-t1 ≤ t ≤ f(n)+t2.

F I G. 1

Printed by Jouve, 75001 PARIS (FR)

**Description**

The present invention relates to an improvement in an optical disk enabling high-density recording of information and a recording/reproducing apparatus of the optical disk.

As well known, in recent years, a digital versatile disk (DVD) has been practically used as an optical disk in which information can be recorded with a high density. The DVD has an information recording capacity which is as much as 4.7 giga bytes (GB) on one surface layer.

There are prepared a plurality of types of DVD. Example of the DVD include a DVD-read only memory (DVD-ROM) for exclusive use in reproduction, a DVD-random access memory (DVD-RAM) in which data can be rewritten, and the like.

The DVD is constituted by forming an information recording layer on a transparent substrate having a thickness of 0.6 mm. Moreover, a laser beam is passed through the transparent substrate and focused onto the information recording layer, and the information is written or read.

For a numerical aperture (NA) of an objective lens for focusing the laser beam, a reference value is 0.6. A refractive index n of the transparent substrate is designated in a range of 1.45 to 1.65 with respect to a laser beam having a wavelength of 650 nm.

Therefore, a substrate material which satisfies the aforementioned condition is selected for the transparent substrate. Polycarbonate is generally used as the substrate material. In this case, the refractive index n of the transparent substrate is 1.58.

As described above, the reference value of thickness of the transparent substrate constituting the DVD is 0.6 mm. Additionally, as an actual problem, generation of a dispersion in the thickness of the transparent substrate during manufacturing cannot be avoided.

However, for an optics for guiding the laser beam to the DVD, the thickness of the transparent substrate of the DVD is designed as the reference value of 0.6 mm. Therefore, when the thickness of the transparent substrate deviates from 0.6 mm, aberration is generated.

It is necessary to suppress the aberration of the optics to a constant value or less. When the aberration increases, a diameter of a beam spot focused on the information recording layer of the DVD increases, and recording/reproducing of the information is adversely affected.

The aberration of the optics caused by the dispersion of the thickness of the transparent substrate is determined by both a deviation from the designed value of the thickness of the transparent substrate and a deviation from the designed value of the refractive index of the transparent substrate.

In the DVD, the range of the thickness allowed for the transparent substrate is defined as a two-dimensional range with the refractive index n of the transparent substrate so that the aberration of the optics caused by the dispersion of the thickness of the transparent substrate is suppressed to a constant value or less.

The two-dimensional range is disclosed, for example, in Jpn. Pat. Appln. KOKAI Publication No. 8-273199. In the publication, for a range of 1.45 to 1.65 of the refractive index n of the transparent substrate, an error is set to $\pm 0.02$ mm with respect to the reference value of the thickness of the transparent substrate.

That is, in a graph indicating the refractive index n on the abscissa and the thickness of the transparent substrate on the ordinate, when the refractive index n is smaller than a lens load specification, the two-dimensional range is defined not in a simple rectangular form, but in a form deviating in a direction for increasing the thickness of the transparent substrate.

At present, a technical development of the DVD has been advanced for a further high-density recording. The diameter of the beam spot focused on the information recording layer of the DVD is proportional to the wavelength of the laser beam, and inversely proportional to the numerical aperture NA which indicates a focus angle of the objective lens.

Therefore, the numerical aperture NA of the objective lens needs to be increased in order to reduce the diameter of the beam spot focused on the information recording layer of the DVD so that the information recording density of the DVD is enhanced.

On the other hand, when the optical disk tilts with respect to an incidence direction of the laser beam because of influences of warp, and the like, an optical path of the laser beam passed through the transparent substrate becomes asymmetrical, and a frame aberration is generated in the laser beam focused on the information recording layer.

A frame aberration amount is approximately proportional to the cube of the value of the numerical aperture NA of the objective lens. Therefore, when the numerical aperture NA is increased for the high-density recording, a very large frame aberration is caused by a slight property change of the optical disk.

The frame aberration amount is proportional to the thickness of a light transmission layer of the optical disk. Therefore, for a next-generation optical disk for achieving the high-density recording, the reduction of the thickness of the light transmission layer is under consideration in order to secure a margin for inclination of the optical disk.

Examples of the numerical aperture NA of the objective lens and the thickness of the light transmission layer in the next-generation optical disk include a numerical aperture NA of the objective lens = 0.85, and a reference value of the thickness of the light transmission layer = 0.1 mm.

Moreover, regarding a thickness error of the light transmission layer in the optical disk which achieves the recording with a density higher than that of the existing DVD, a proposal is disclosed, for example, in Jpn. Pat. Appln. KOKAI Publication No. 2000-11454.

That is, assuming that the wavelength of the laser beam is $\lambda$, the publication proposes that a thickness unevenness $\Delta t$ of the light transmission layer of the optical disk be set to:

$$|\Delta t| \leq 5.26\lambda/NA^4.$$

However, when the thickness unevenness $\Delta t$ of the light transmission layer of the optical disk is defined by the above equation, a range is derived using a thickness unevenness standard in a compact disk (CD) system as a reference, and is inappropriate from the following two viewpoints.

(1) The thickness range of the light transmission layer should originally be defined with an absolute value in consideration of the refractive index n of the light transmission layer as in the existing DVD. On the other hand, only the thickness range of the light transmission layer is defined by the above equation.

(2) Introduction of a mechanism for correcting a spherical surface aberration generated with the enhanced NA is considered in the next-generation optical disk. It is not appropriate any more to define the thickness range of the light transmission layer using the CD system as the reference.

The above (1) is a condition required when the whole drive system of the optical disk is considered. That is, in the optical disk drive, the thickness and refractive index of the optical disk to be recorded/reproduced are principally determined as the specifications of the objective lens constituting the optics without any exception.

Therefore, the optical disk mounted on the optical disk drive is naturally requested to have the same values of the thickness and refractive index of the light transmission layer as specified values of the optical disk drive.

However, when the optical disk is manufactured, or when the material of the light transmission layer for use in the optical disk is selected by a maker, the thickness and refractive index of the light transmission layer of the optical disk mounted on the optical disk drive inevitably have constant margins. A problem lies in an allowed degree of the margin.

It is adequate to use the load specified value of the objective lens of the optical disk drive as the reference and to define the allowable margin as the range of the thickness and refractive index of the light transmission layer which gives a constant wave front aberration by the deviation from the reference value.

On the other hand, the above equation simply defines the range of the thickness of the light transmission layer. When the optics specifications of the optical disk drive are considered, a concept of the refractive index required to be simultaneously considered is naturally lacking. It has to be said that the definition is inappropriate as a system including the optical disk and disk drive.

In the DVD, the constant range of the thickness and refractive index of the transparent substrate (light transmission layer) is already determined as the standard under the aforementioned idea. However, with the enhancement of NA, needless to say, the standard cannot be valid in the next-generation optical disk whose specified value of the thickness of the light transmission layer largely differs.

The above (2) is a characteristic prerequisite of the next-generation optical disk. In the next-generation optical disk, the increase of the frame aberration with the enhancement of NA can be compensated for by the reduction of the light transmission layer as described above.

On the other hand, with the enhancement of NA, the increase of the spherical surface aberration accompanying the thickness error of the light transmission layer also becomes remarkable. This is because the spherical surface aberration is approximately proportional to a value obtained by multiplying the NA four times.

Even when the thickness of the light transmission layer is reduced, the spherical surface aberration cannot be compensated. Therefore, in the next-generation optical disk, the introduction of the mechanism for correcting the spherical surface aberration is newly considered.

The correction mechanism of the spherical surface aberration has not been introduced in the conventional DVD or CD system. Here is a large difference from the conventional system. Therefore, when the conventional DVD and CD system are considered as the standard in defining the error range of the thickness of the light transmission layer, an inappropriate result is obviously obtained.

That is, on the assumption that the next-generation optical disk includes the correction mechanism of the spherical surface aberration, it is necessary to select the reference value of the wave front aberration different from that of the conventional system and to define the range of the thickness of the light transmission layer.

For example, it is assumed in the conventional system that the reference value of the wave front aberration is 0.04 λrms or less. However, in the next-generation optical disk, when an effect obtained by the mechanism for correcting the spherical surface aberration is considered, the reference value of the wave front aberration can be moderated down to 0.10 λrms.

As described above, when the correction mechanism of the spherical surface aberration is introduced in the drive system of the next-generation optical disk, and when the conventional system is considered as the standard, an erroneous result is brought about. The above equation uses the CD system as the standard, but the standard is not appropriate in the next-generation optical disk.

In the specifications of the next-generation optical disk, for example, with λ = 405 nm, NA = 0.85, the above equation designates the thickness unevenness range of $|\Delta t| \leq 4.08$ μm. This is an unreasonably narrow range, when the presence of the correction mechanism of the spherical surface aberration is considered. Therefore, the yield in the production of the optical disk is excessively decreased.

The present invention has been developed in consideration with the above circumstances, and an object thereof is to provide an optical disk and recording/reproducing apparatus of the optical disk in which effective ranges of thickness of a light transmission layer and refractive index of the light transmission layer are defined, for example, in a next-generation optical disk and which are suitable for a high-density recording.

According to one aspect of the present invention, there is provided an optical disk comprising:

an information recording layer formed on a substrate; and
a cover layer which has a light transmission property and with which the information recording layer is covered,

wherein ranges of a thickness and a refractive index of the cover layer are set such that an aberration generated by deviations from specified values of the thickness and the refractive index of the cover layer is within a constant allowable value.

According to another aspect of the present invention, there is provided a recording/reproducing apparatus of an optical disk constituted by covering an information recording layer formed on a substrate with a cover layer having a light transmission property and setting ranges of a thickness and a refractive index of the cover layer so that an aberration generated by deviations from specified values of the thickness and the refractive index of the cover layer is within a constant allowable value, the apparatus comprising:

a correcting section which corrects a spherical surface aberration in the cover layer during irradiation of the optical disk with a laser beam from the cover layer.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a side sectional view showing a detailed structure of an optical disk according to a first embodiment of the present invention;
FIG. 2 is a block diagram showing an optical disk drive for performing recording/reproducing with respect to the optical disk in the first embodiment;
FIG. 3 is an explanatory view of an rms value of aberration of the optical disk using a relation between a refractive index and a thickness of a cover layer as a parameter;
FIG. 4 is an explanatory view of ranges of the refractive index and thickness of the cover layer of the optical disk, when an allowable aberration in the first embodiment is 0.10 λrms;
FIG. 5 is an explanatory view of the ranges of the refractive index and thickness of the cover layer of the optical disk, when the allowable aberration in the first embodiment is 0.04 λrms;
FIG. 6 is an explanatory view of the ranges of the refractive index and thickness of the cover layer of the optical disk in a known example;
FIG. 7 is an explanatory view showing another example of the ranges of the refractive index and thickness of the cover layer of the optical disk in the known example;
FIG. 8 is an explanatory view of the ranges of the refractive index and thickness of the cover layer of the optical disk according to a second embodiment of the present invention;
FIG. 9 is a side sectional view showing a detailed structure of the optical disk according to a third embodiment of the present invention;
FIG. 10 is an explanatory view of the ranges of the refractive index and thickness of the cover layer of the optical disk in the third embodiment; and

FIG. 11 is an explanatory view of the ranges of the refractive index and thickness of the cover layer of the optical disk according to a fourth embodiment of the present invention.

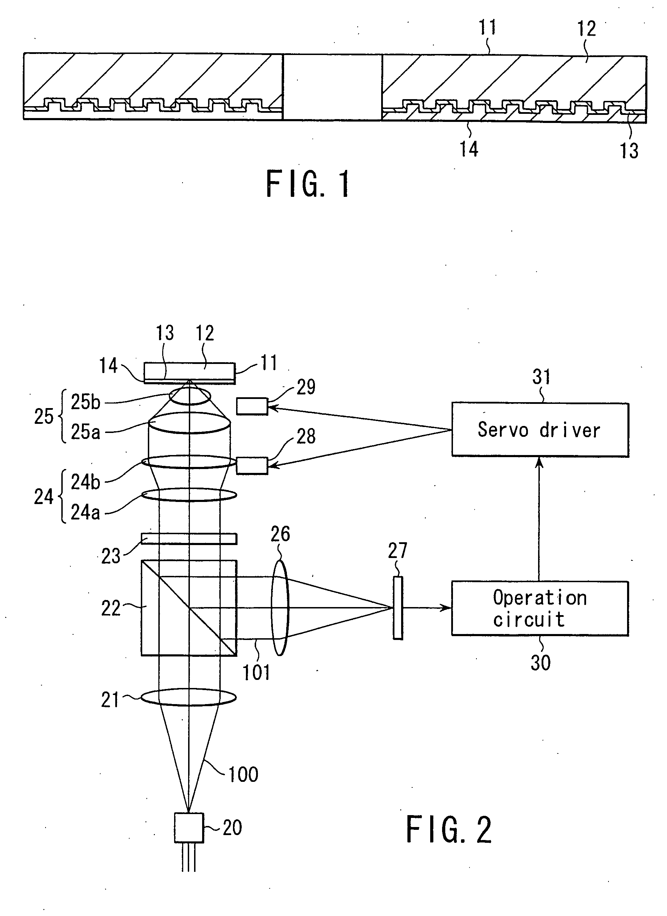

A first embodiment of the present invention will be described hereinafter in detail with reference to the drawing. First, FIG. 1 shows a structure of an optical disk 11 described in the first embodiment in a section.

In the optical disk 11, for example, an information recording layer 13 including a phase change recording film is formed on a substrate 12 formed of polycarbonate. When the optical disk 11 is a disk for exclusive use in reproduction, the information recording layer 13 by a metal reflective film is formed instead of the phase change recording film.

A cover layer (light transmission layer) 14 having a thickness t is formed on the information recording layer 13. The cover layer 14 is a sheet which is formed of a plastic material and which has a thickness t. The cover layer 14 is bonded onto the information recording layer 13 via an adhesive mass, ultraviolet cured resin, or the like.

FIG. 2 shows an optical disk drive which performs recording/reproducing with respect to the optical disk 11. The optical disk drive uses a short-wavelength semiconductor laser beam source 20 as a light source. An outgoing light 100 from the semiconductor laser beam source 20 is a light having a violet wavelength band, for example, in a range of 395 nm to 415 nm.

The outgoing light 100 from the semiconductor laser beam source 20 is transformed to a parallel light by a collimator lens 21, successively passed through a polarized beam splitter 22, $\lambda/4$ plate 23, and relay lens system 24, and incident upon an objective lens 25. Thereby, the light is passed through the cover layer 14 of the optical disk 11, and focused onto the information recording layer 13.

A reflected light 101 from the information recording layer 13 of the optical disk 11 is again passed through the cover layer 14 of the optical disk 11, successively transmitted through the objective lens 25, relay lens system 24, and $\lambda/4$ plate 23, reflected by the polarized beam splitter 22 substantially at a right angle, transmitted through a photodetect lens system 26, and incident upon a photodetector 27.

The photodetector 27 has a light receiving section divided into a plurality of regions, and outputs a current corresponding to a light intensity from each light receiving region. The current outputted from each light receiving region of the photodetector 27 is converted to a voltage by an I/V amplifier (not shown), and supplied to an operation circuit 30.

The operation circuit 30 calculates/processes a voltage signal corresponding to each light receiving region of the photodetector 27, and thereby generates a high frequency (HF) signal, a focus error signal, a tracking error signal, a control signal of the relay lens system 24, and the like.

The focus error signal and tracking error signal are supplied to a driver 29 via a servo driver 31, and thereby controlled in a focus direction and tracking direction of the objective lens 25.

The relay lens system 24 is constituted of a bottom lens 24a and top lens 24b. The top lens 24b is controlled in an optical axis direction, when the control signal of the relay lens system 24 outputted from the operation circuit 30 is supplied to a driver 28 via the servo driver 31.

The relay lens system 24 is designed such that the laser beam is incident substantially as a parallel light upon the objective lens 25, when the thickness of the cover layer 14 is of a defined value (e.g., 100 $\mu$m).

When the thickness of the cover layer 14 deviates from the defined value, a spherical surface aberration occurs because of a thickness error of the cover layer 14. In this case, the shape of a beam spot focused on the information recording layer 13 of the optical disk 11 is strained. Therefore, it becomes difficult to perform a stable and accurate recording/reproducing.

On the other hand, when the incident light upon the objective lens 25 is converted to a convergent or divergent light, the spherical surface aberration is generated. Moreover, when the top lens 24b of the relay lens system 24 is moved in the optical axis direction, the incident light upon the objective lens 25 can be converted to the convergent or divergent light.

Therefore, when the top lens 24b of the relay lens system 24 is moved in the optical axis direction in accordance with a thickness error amount of the cover layer 14, and the incident light upon the objective lens 25 is converted to the convergent or divergent light, the spherical surface aberration generated by the thickness error of the cover layer 14 can be corrected.

Concretely, when the thickness of the cover layer 14 is larger than a defined value, the top lens 24b of the relay lens system 24 is moved in the optical axis direction in accordance with the thickness error amount of the cover layer 14 so that the incident light upon the objective lens 25 is converted to the divergent light.

Conversely, when the thickness of the cover layer 14 is smaller than the defined value, the top lens 24b of the relay lens system 24 is moved in the optical axis direction in accordance with the thickness error amount of the cover layer 14 so that the incident light upon the objective lens 25 is converted to the convergent light.

In the optical disk drive which performs the recording/reproducing with respect to the next-generation optical disk in this manner, there is assumed to be provided means for correcting the spherical surface aberration generated by the thickness error from the defined value of the cover layer 14 of the optical disk 11.

This has not been considered in the CD or the DVD as the conventional optical disk system. Therefore, when the conventional definition is applied as such during the manufacturing of the next-generation optical disk, an erroneous result is produced.

The optical disk 11 described in the first embodiment is assumed to have the ranges of the thickness error and refractive index of the cover layer 14 in which the recording/reproducing in the optical disk drive including the correction means of the spherical surface aberration is taken into consideration.

For the specifications of the optical disk drive which performs the recording/reproducing with respect to the next-generation disk, for example, the wavelength of the laser beam is 405 nm, and the numerical aperture NA of the objective lens 25 is 0.85. The use of the specifications is considered.

Moreover, it is assumed that the cover layer 14 has a refractive index of 1.622 and thickness of 100 $\mu$m, and the objective lens 25 has the aberration completely corrected and is ideal with respect to the optical disk 11 having such lens load.

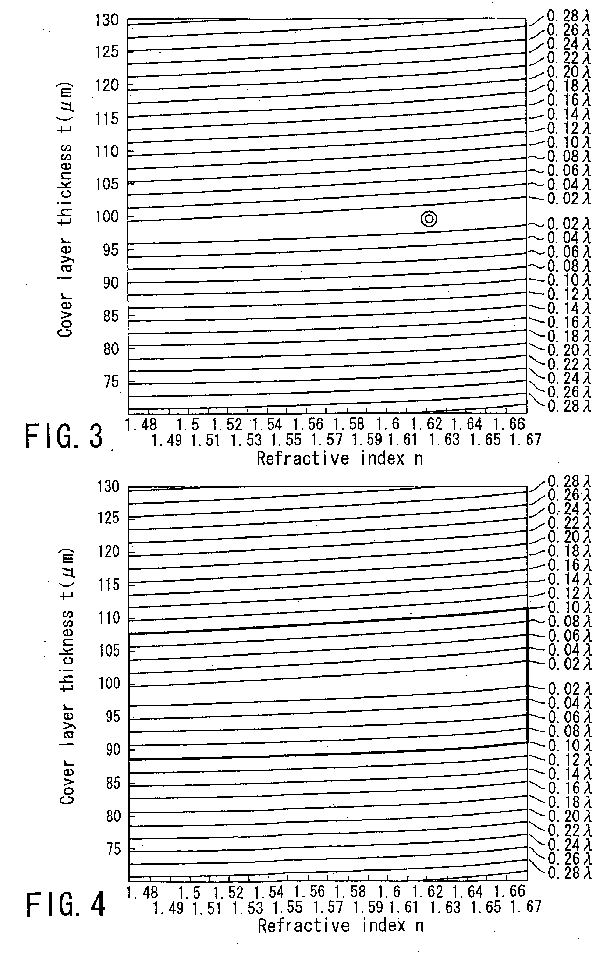

The optical disk 11 having various and different values of the refractive index n and thickness t of the cover layer 14 is used with respect to the objective lens 25, and the rms value of the generated wave front aberration is obtained. The results are shown in FIG. 3.

FIG. 3 shows the refractive index n of the cover layer 14 on the abscissa, the thickness t of the cover layer 14 on the ordinate, and the rms values of the aberration in respective points on a coordinate plane with contour lines. The contour line has a graduation which corresponds to 2/100 of the wavelength (= 405 nm) of the laser beam. In FIG. 3, a point shown by a double circle indicates a point of the reference specifications, that is, the load specifications of the objective lens 25, and the aberration turns to 0 in this point.

As seen from the result, when the optical disk 11 having various and different values of the refractive index n and thickness t of the cover layer 14 is used and, for example, when the refractive index n is larger than the lens load specified value in order to set a residual aberration amount to be constant, it is better to set the thickness t of the cover layer 14 to be slightly'larger than the specified value.

Therefore, the cover layer 14 of the optical disk 11 in the next-generation DVD needs to be defined such that the error allowable range of the thickness t of the cover layer 14 is changed as the absolute value in accordance with the refractive index n of the cover layer 14.

The ranges of the refractive index n and thickness t of the optical disk 11 described in the first embodiment are shown in FIG. 4. This shows the following region.

$$\text{Refractive index: } 1.47 \leq n \leq 1.67 \tag{1}$$

$$\text{Cover layer thickness: } f(n)\text{-}t1 \leq t \leq f(n)\text{+}t2 \ (\mu m) \tag{2}$$

$$f(n) = \frac{A_1 \times n^3}{(n^2 - 1)} \times \frac{(n^2 - A_2)}{(n^2 - A_3)} \ (\mu m) \tag{3}$$

$A_1$ = 0.049245,
$A_2$ = -0.579135,
$A_3$ = 0.012842
t1, t2 = 10 ($\mu$m)

This substantially agrees with a range in which the aberration in the contour line diagram shown in FIG. 3 is 0.1 $\lambda$rms or less. When the optical disk 11 having this range is defined, the aberration by the deviation from the specified values of the thickness t and refractive index n of the cover layer 14 can substantially be kept to 0.1 $\lambda$rms or less.

The contour lines indicating the wave front aberration amounts in FIG. 3 are arranged substantially in parallel in a coordinate direction, and a curve is obtained by giving a constant offset to the equation (3). Therefore, when the allowable value of the aberration is determined, the ranges of the thickness t and refractive index n of the cover layer 14 can be determined by the above equations (1) to (3).

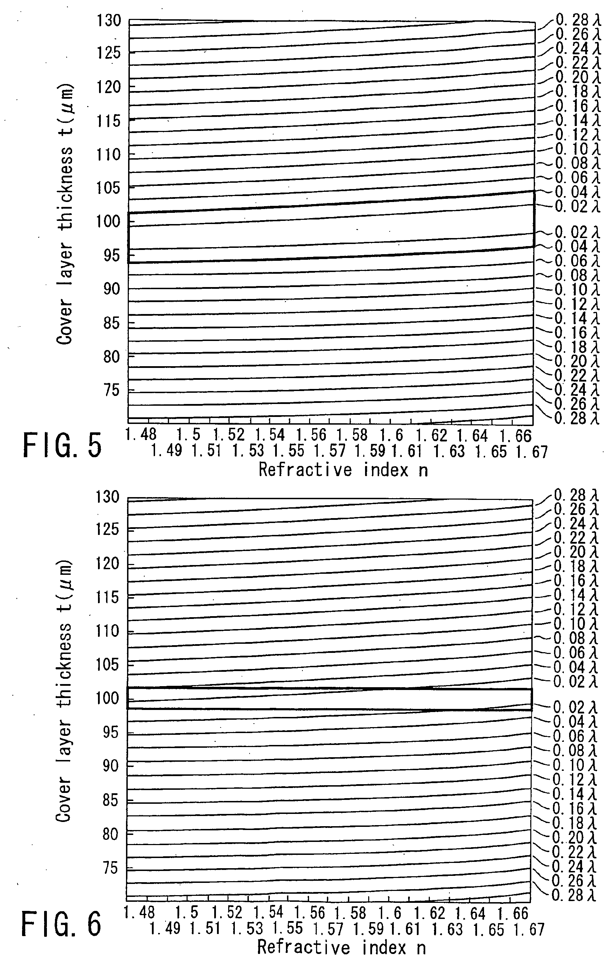

In this case, when t1, t2 are changed in accordance with the allowable value of the aberration, the range of the thickness t of the cover layer 14 may be adjusted. For example, when the allowable aberration is 0.04 $\lambda$rms, t1, t2 = 4 $\mu$m is set in the above equations, and an appropriate range can be designated (see FIG. 5).

On the other hand, the range of the refractive index n is determined by the material of the cover layer 14 and the wavelength of the laser beam. Therefore, a range including an effective material of the cover layer 14 of the optical disk 11 can be defined.

In this case, with n = about 1.47 to 1.67, the effective materials such as polycarbonate are used as the cover layer (light transmission layer) 14 of the optical disk 11, and the refractive index n in the violet wavelength band can be covered.

In the conventional optical disk drive, the aberration by the thickness and refractive index error of the light transmission layer of the optical disk is limited to 0.02 to 0.03 λrms. Therefore, for example, when the allowable value of the aberration is set to 0.02 λrms, it is necessary, to set the error range of the thickness t of the cover layer 14 to t1, t2 = 2 μm from FIG. 3.

In this case, it is easily imagined that the manufacturing margin of the optical disk 11 is very small. However, it is assumed in the next-generation optical disk that the correction means of the spherical surface aberration is introduced as described above.

Therefore, the allowed aberration amount can be enlarged as compared with the conventional optical disk drive. For example, when the allowed aberration amount is set to 0.1 λrms as described above, t1, t2 = 10 μm, the manufacturing margin of the optical disk 11 can be set to be large, and the enhancement of the yield can be expected.

On the other hand, specifications in which the thickness error of the cover layer is set to be constant regardless of the refractive index are considered as in the aforementioned known example. This corresponds to the use of the above equation (3) as a constant (specified value of the cover layer thickness).

In this case, for example, with t1, t2 = 2 μm, a region is obtained as shown in FIG. 6. As seen from FIG. 6, the region does not agree with a region in which the wave front aberration indicates a constant value or less.

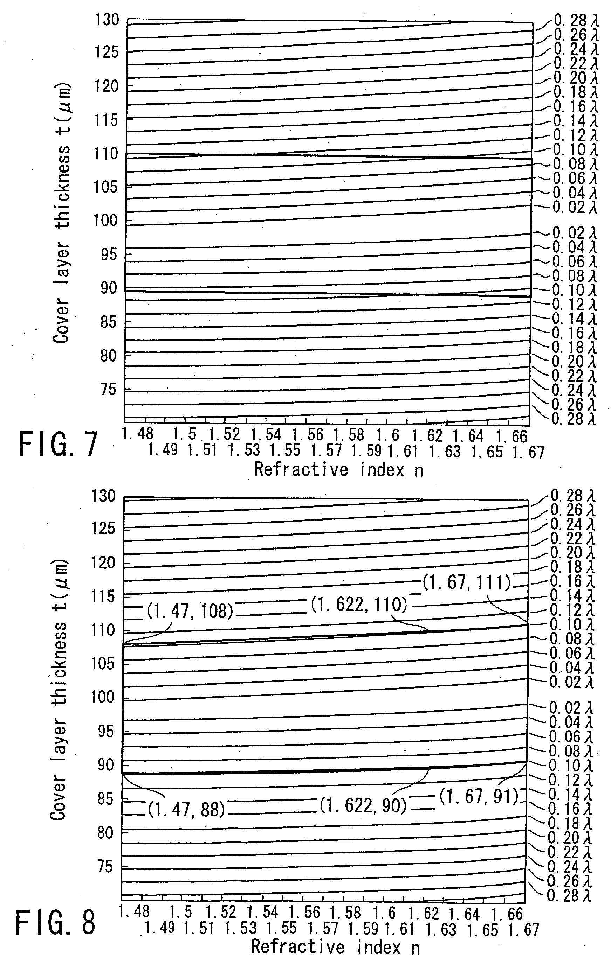

As a comparative example of the first embodiment, an example of t1, t2 = 10 μm is considered, and a region is obtained as shown in FIG. 7. Also in this case, the value of the wave front aberration largely changes in a region boundary, and the aberration reaches 0.12 λrms, for example, where n = 1.47, t = 110 μm.

Therefore, with t1, t2 = 10 μm in the first embodiment, considering that the wave front aberration is suppressed to 0.10 λrms or less in all the regions, a necessity of increasing the allowed aberration amount occurs.

Conversely, in the conventional example, the allowable range of the thickness error of the cover layer has to be narrowed with respect to a certain allowed aberration amount. That is, the margin in manufacturing the disk is reduced.

A second embodiment of the present invention will next be described. FIG. 8 shows the range of the thickness t and refractive index n of the cover layer 14 of the optical disk 11 described in the second embodiment. This range is substantially similar to the range of the optical disk 11 of the first embodiment shown in FIG. 4, and the region is shown as a range surrounded with a straight line, not a curve.

That is, in FIG. 8, a plurality of (three in the drawing) points are sampled from a curve which indicates an aberration of 0.10 λrms, and the range is set with the straight lines which connect the sampled points. An effect substantially equal to that of the optical disk 11 of the first embodiment can also be obtained by the range set as described above.

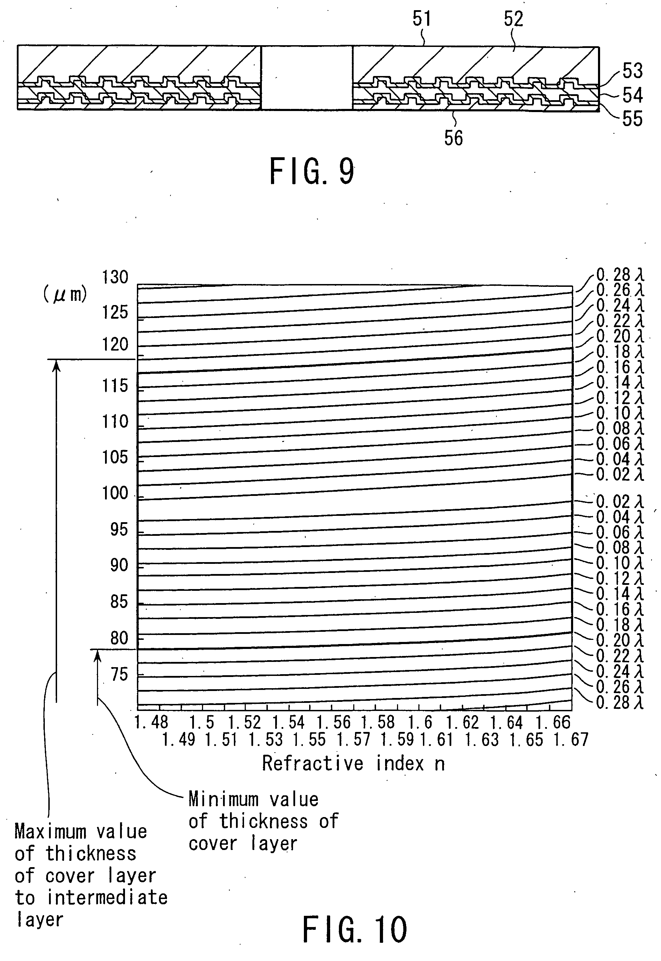

A third embodiment of the present invention will be described. FIG. 9 shows a section of an optical disk 51 described in the third embodiment. The optical disk 51 is constituted by forming an information recording layer 53 including, for example, a phase change recording film on a substrate 52 formed, for example, of polycarbonate.

A transparent intermediate layer 54 is formed on the information recording layer 53, and another information recording layer 55 is formed on the intermediate layer 54. The information recording layers 53, 55 may be layers for exclusive use in reproduction by metal reflective films, or recordable/reproducible layers. Alternatively, one of the layers may be the layer for exclusive use in reproduction, while the other may be the recordable/reproducible layer.

A cover layer (light transmission layer) 56 is formed on the information recording layer 55. The cover layer 56 is a sheet formed, for example, of a plastic material. The cover layer 56 is bonded onto the information recording layer 55 via a pressure-sensitive adhesive or an ultraviolet cured resin.

The intermediate layer 54 has a function'of optically interrupting leak of information (crosstalk) from one information recording layer 53 or 55, while the other information recording layer 55 or 53 is reproduced.

In this sense, an interval between two information recording layers 53, 55 may be as large as possible, and the intermediate layer 54 may preferably be thicker. However, in this case, the recording/reproducing optics bears a burden.

That is, when the thickness of the surface of the cover layer 56 to the center of the intermediate layer 54 is defined as the load of the objective lens 25, the aberration by the thickness error of half the thickness of the intermediate layer 54 is generated even during the recording/reproducing of either the information recording layer 53 or 55.

Therefore, from a viewpoint of the aberration of the recording/reproducing optics, the intermediate layer 54 needs to be preferably thin. That is, the thickness of the intermediate layer 54 is determined by a point of compromise of the crosstalk between the information recording layers 53 and 55 with respect to a tradeoff relation in the aberration of the recording/reproducing optics.

For example, when the wavelength of the laser beam is set to 405 nm, and the numerical aperture NA of the objective lens 25 is set to 0.85 as the specifications of the optical disk drive for performing the recording/reproducing with respect to the
next-generation optical disk, an appropriate thickness of the intermediate layer 54 is in a range of about 20 to 30 μm in consideration of the above tradeoff.

It is preferable to represent the defined thickness of the light transmission layer of the two-layers type optical disk 51 by a minimum value of the thickness of the cover layer 56 and a maximum value of a total thickness of the cover layer 56, information recording layer 55 disposed adjacent to the cover layer 56, and intermediate layer 54.

The ranges of the thickness and refractive index of the light transmission layer of the optical disk 51 are shown in FIG. 10. Similarly as the aforementioned embodiment, the lens load of the light transmission layer having a refractive index of 1.622 and thickness of 100 μm in the optical disk 51 is assumed.

In the defined region, the refractive index is 1.47 ≤ n ≤ 1.67, the thickness of the cover layer 56 is f(n)-t1 or more, the thickness of the cover layer 56 + information recording layer 55 + intermediate layer 54 is f(n)+t2 or less, t1, t2 = 20 μm, and f(n) is represented by the above equation (3). As a result, since the thickness of the intermediate layer 54 is added, the range of the thickness direction is broadened as compared with a one-layer constitution.

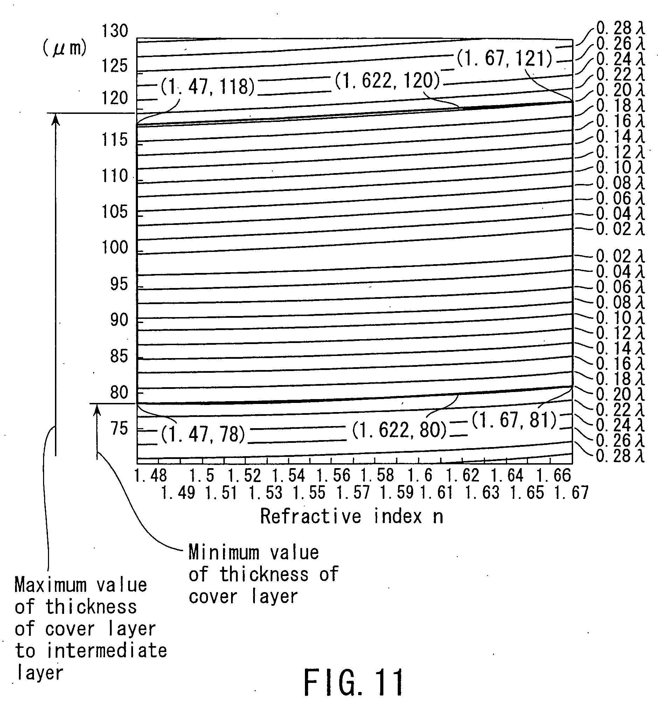

A fourth embodiment of the present invention will be described. FIG. 11 shows the ranges of the thickness and refractive index of the cover layer 56 of the optical disk 51 described in the fourth embodiment.

The range is substantially similar to that of the optical disk 51 of the third embodiment shown in FIG. 10, and the region is shown as the range surrounded with the straight line, not the curve. Also in this case, a plurality of (three in the drawing) points are sampled from the curve indicating the aberration of 0.20 λrms, and the range is set with the straight line which connects the sampled points.

An effect substantially equal to that of the optical disk 51 of the third embodiment can be obtained even by the range set in this manner. Moreover, the third and fourth embodiments show two information recording layers 53, 55, but the present invention can, needless to say, be applied to the optical disk having three or more information recording layers.

Additionally, the present invention is not limited to the aforementioned embodiments, and can variously be implemented within a range which does not depart from the scope.

**Claims**

1.  An optical disk **characterized by** comprising:

    an information recording layer (13) formed on a substrate (12); and
    a cover layer (14) which has a light transmission property and with which the information recording layer (13) is covered,

    wherein ranges of a thickness and a refractive index of said cover layer (14) are set such that an aberration generated by deviations from specified values of the thickness and the refractive index of said cover layer (14) is within a constant allowable value.

2.  The optical disk according to claim 1, **characterized in that** a function f(n) which is not a constant regarding the refractive index n of said cover layer (14), and constants t1, t2 determined based on the allowable value of the aberration in said cover layer (14) are used to set the ranges of the thickness and the refractive index of said cover layer (14) so that the thickness t of said cover layer (14) is

$$f(n)\text{-}t1 \leq t \leq f(n)\text{+}t2.$$

3.  The optical disk according to claim 2, **characterized in that** a wavelength of a laser beam incident upon said cover layer (14) is set to a range of 395 to 415 nm, and the refractive index of said cover layer (14) is set to a range of 1.47 to 1.67.

4.  The optical disk according to claim 2, **characterized in that** a numerical aperture of a lens which irradiates said cover layer (14) with a laser beam is 0.85, and said function f(n) is:

$$f(n) = \frac{A_1 \times n^3}{(n_2 - 1)} \times \frac{(n^2 - A_2)}{n^2 - A_3)} (\mu m) \text{ , in which:}$$

$A_1 = 0.049245$,
$A_2 = -0.579135$, and
$A_3 = 0.012842$.

**5.** The optical disk according to claim 4, **characterized in that** each of said constants t1 and t2 is set to 2 μm or more.

**6.** The optical disk according to claim 4, **characterized in that** each of said constants t1 and t2 is set to 10 μm.

**7.** The optical disk according to claim 2, **characterized in that** the ranges of the thickness and the refractive index of said cover layer (14) are set by a straight line obtained by sampling predetermined positions of a curve represented by said f(n)-t1 and said f(n)+t2 and connecting respective sampled points.

**8.** An optical disk **characterized by** comprising:

a plurality of information recording layers. (53, 55) laminated on a substrate (52) via intermediate layers (54) having light transmission properties; and
a cover layer (56) which has a light transmission property and with which an outer information recording layer (55) is covered,

wherein a function f(n) which is not a constant regarding a refractive index n of said cover layer (56), and constants t1, t2 determined based on an allowable value of an aberration in a light transmission layer including said cover layer (56), the information recording layer (55), and the intermediate layer (54) are used to set a thickness t of said cover layer (56) to f(n)-t1 or more, and to set a total thickness of said cover layer (56), the intermediate layer (54), and the information recording layer (55) excluding the information recording layer (53) closest to said substrate (52) to f(n)+t2 or less.

**9.** The optical disk according to claim 8, **characterized in that** a wavelength of a laser beam incident upon said cover layer (56) is set to a range of 395 to 415 nm, and the refractive index of said cover layer (56) including the intermediate layer (54) is set to a range of 1.47 to 1.67.

**10.** The optical disk according to claim 8, **characterized in that** a numerical aperture of a lens which irradiates said cover layer (56) with a laser beam is 0.85, and said function f(n) is:

$$f(n) = \frac{A_1 \times n^3}{(n^2 - 1)} \times \frac{(n^2 - A_2)}{(n^2 - A_3)} (\mu m), \text{ in which:}$$

$A_1 = 0.049245$,
$A_2 = -0.579135$, and
$A_3 = 0.012842$.

**11.** The optical disk according to claim 10, **characterized in that** each of said constants t1 and t2 is set to 2 μm or more.

**12.** The optical disk according to claim 10, **characterized in that** each of said constants t1 and t2 is set to 20 μm.

**13.** The optical disk according to claim 8, **characterized in that** a region obtained by sampling predetermined positions of a curve represented by said f(n)-t1 and connecting respective sampled points by a straight line is set as the range of the thickness t of said cover layer (56), and a region obtained by sampling predetermined positions of a curve represented by said f(n)+t2 and connecting respective sampled points by a straight line is set as the range of a total thickness of said cover layer (56), the intermediate layer (54), and the information recording layer (55) excluding the information recording layer (53) closest to said substrate (52).

**14.** A recording/reproducing apparatus of an optical disk (11) constituted by covering an information recording layer (13) formed on a substrate (12) with a cover layer (14) having a light transmission property and setting ranges of a thickness and a refractive index of said cover layer (14) so that an aberration generated by deviations from specified values of the thickness and the refractive index of said cover layer (14) is within a constant allowable value, said apparatus **characterized by** comprising:

a correcting section (24, 28, 30, 31) which corrects a spherical surface aberration in said cover layer (14) during irradiation of the optical disk (11) with a laser beam from said cover layer (14).

15. The recording/reproducing apparatus of the optical disk (11) according to claim 14, **characterized in that** a function f(n) which is not a constant regarding the refractive index n of said cover layer (14), and constants t1, t2 determined based on an allowable value of the aberration in said cover layer (14) are used to set the ranges of the thickness and the refractive index of said cover layer (14) so that the thickness t of said cover layer (14) is

$$f(n)\text{-}t1 \le t \le f(n)\text{+}t2.$$

FIG. 1

FIG. 2

FIG. 3

FIG. 4

**FIG. 5**

Cover layer thickness t(μm) vs. Refractive index n

**FIG. 6**

Cover layer thickness t(μm) vs. Refractive index n

FIG. 7

FIG. 8

51 52

53
54
55

56

## FIG. 9

(μm)

130 ⎯ 0.28 λ
⎯ 0.26 λ
125 ⎯ 0.24 λ
⎯ 0.22 λ
120 ⎯ 0.20 λ
⎯ 0.18 λ
115 ⎯ 0.16 λ
⎯ 0.14 λ
110 ⎯ 0.12 λ
⎯ 0.10 λ
105 ⎯ 0.08 λ
⎯ 0.06 λ
100 ⎯ 0.04 λ
⎯ 0.02 λ
95
⎯ 0.02 λ
90 ⎯ 0.04 λ
⎯ 0.06 λ
85 ⎯ 0.08 λ
⎯ 0.10 λ
80 ⎯ 0.12 λ
⎯ 0.14 λ
75 ⎯ 0.16 λ
⎯ 0.18 λ
⎯ 0.20 λ
⎯ 0.22 λ
⎯ 0.24 λ
⎯ 0.26 λ
⎯ 0.28 λ

1.48   1.5   1.52   1.54   1.56   1.58   1.6   1.62   1.64   1.66
   1.49   1.51   1.53   1.55   1.57   1.59   1.61   1.63   1.65   1.67

Refractive index n

Minimum value
of thickness of
cover layer

Maximum value
of thickness
of cover layer
to intermediate
layer

## FIG. 10

FIG. 11